# EUROPÄISCHE PATENTSCHRIFT

(11) **EP 1 902 768 B1**
(45) Veröffentlichungstag und Bekanntmachung des Hinweises auf die Patenterteilung: **29.04.2009**
(21) Anmeldenummer: 07114750.8
(22) Anmeldetag: 22.08.2007
(51) Int. Cl.: B01D 46/10, B01D 46/52, F02M 35/024

(54) **Luftfilter mit drehbarem Filtereinschub für ein Kraftfahrzeug**
Air filter with a pivotable filter insert for a motor vehicle
Filtre à air doté d'un tiroir enfichable de filtre pour un véhicule automobile

(30) Priorität: 12.09.2006 FR 0653687
(43) Veröffentlichungstag der Anmeldung: 26.03.2008
(73) Patentinhaber: MANN+HUMMEL GmbH, 71638 Ludwigsburg (DE)
(72) Erfinder: Champion, Arnaud, 53000, Laval (FR); Gwenael, Foulboeuf, 53260, Entrammes (FR)

(56) Entgegenhaltungen:
- DE-A1- 4 218 396
- DE-A1- 19 638 790
- DE-A1-7102004 016 99
- DE-C1- 3 642 135
- US-A- 3 353 341

## Beschreibung

### Technisches Gebiet

Die vorliegende Erfindung hat einen Luftfilter zum Gegenstand, der dazu bestimmt ist, in einem zu reinigenden Luftstrom unter der Motorhaube eines Kraftfahrzeugs eingebaut zu werden. Derartige Filter beinhalten normalerweise:

ein Filtergehäuse mit einem Lufteinlass auf der Rohseite, durch welchen die Außenluft angesaugt wird, und mit einem Luftauslass auf der Reinseite, durch welchen die angesaugte Luft nach dem Filtern dem Motor des Fahrzeugs zugeführt wird,

einen herausnehmbaren Filtereinschub, der zwischen dem Lufteinlass und dem Luftauslass in Durchströmrichtung des zu reinigenden Stroms eingesetzt ist, und

einen in dem Filtereinschub eingebauten Filtereinsatz.

Derartige Filtereinsätze, die im Allgemeinen aus Papier oder Vlies bestehen, müssen nach einer gewissen Benutzungszeit, die von einigen Tagen (Motoren von Baufahrzeugen) bis zu mehreren Monaten (Reisefahrzeuge) gehen kann, und je nach produzierter Staubmenge ausgewechselt werden.

### Stand der Technik

Von den Fachleuten wird zurzeit eine große Palette an Luftfiltern dieses Typs auf dem Markt angeboten. Ein Beispiel eines vorbekannten Luftfilters ist in der Offenlegungsschrift DE 196 38 790 A1 gezeigt.

Der Filtereinsatz dieser Luftfilter ist mit umlaufenden Dichtungen vor allem aus Polyurethan ausgestattet, die darauf ausgegossen, aufgeschweißt oder mit anderen Mitteln darauf befestigt sind, und die während des Einbaus des Filtereinschubs zusammengepresst werden, um so die Dichtheit zwischen diesem Einschub und dem Filtergehäuse sicherzustellen.

Je nach Konfiguration des Luftfilters kann diese Kompression entweder durch eine translatorische Bewegung oder eine Rotationsbewegung des Filtereinschubs im Verhältnis zum Filtergehäuse erreicht werden.

### Offenbarung der Erfindung

Die Erfindung betrifft insbesondere Luftfilter, die mit drehbaren Filtereinschüben versehen sind.

In einem derartigen Luftfilter dreht sich der Filtereinschub im Verhältnis zum Filtergehäuse beweglich um eine Achse, die sich im hinteren Teil dieses Gehäuses befindet, und zwar zwischen einerseits einer Arbeitsposition, in der er in eine Lagerung des Gehäuses eingeführt wird, und andererseits einer Freigabeposition, in der er aus dieser Lagerung entnommen wird, um dann aus dem Filtergehäuse herausgenommen zu werden, damit insbesondere der Filtereinsatz ausgetauscht werden kann, wenn dieser verbraucht ist.

Nach dem Einsetzen eines neuen Filtereinsatzes in den Filtereinschub wird die umlaufende Dichtung, mit der dieser Einsatz ausgestattet ist, automatisch während des Einbaus dieses Einschubs in Arbeitsposition zusammengedrückt

Diese Kompression ist allerdings nicht gleichmäßig und die Dichtung wird im hinteren Teil des Filtergehäuses schwächer zusammengedrückt, was zu Nachteilen führen kann, insbesondere dann, wenn der Lufteinlass des Filtergehäuses ungenügend geschützt oder schlecht auf das Fahrzeug montiert wurde.

Tatsächlich können Verunreinigungen (Staub, Sand, Schnee oder andere Partikel) durch den Lufteinlass in den Filter eindringen und sich auf dem Filtereinsatz ansammeln, was eine Beeinträchtigung der Luftzirkulation durch diesen Einsatz zur Folge hat.

In der Folge und während der Motor in Betrieb ist, entsteht ein dem Filtereinsatz nachgelagerter Unterdruck (auf der Reinseite).

Das Vorhandensein eines derartigen Unterducks kann außer einer Beschädigung des Filtereinsatzes noch ein Verschieben durch Ansaugen der Dichtung, mit der der Filtereinsatz im hinteren Teil des Filtergehäuses ausgestattet ist, zur Folge haben und infolgedessen in diesem Teil einen Bruch der Dichtung.

Gegenstand der vorliegenden Erfindung ist es, diesen Nachteil zu beheben, indem jegliches Verschieben der Dichtung in Arbeitsposition durch Ansaugen wegen des Ansammelns von Verunreinigungen auf dem Filtereinsatz verhindert wird.

Zu diesem Zweck betrifft die Erfindung einen Luftfilter mit drehbarem Filtereinschub des oben genannten Typs, dadurch gekennzeichnet, dass die Dichtung an der Drehachse des Filtereinschubs mit Dichtungszapfen ausgestattet ist, die in dessen Verlängerung angebracht sind und über diesen Einschub so hinausragen, dass sie zwischen ihm und dem Filtergehäuse in Arbeitsposition festgeklemmt werden.

Gemäß der Erfindung können die Dichtungszapfen, deren Anzahl im Normalfall mindestens drei beträgt (zwei seitliche und ein mittlerer), vorzugsweise hakenförmig gebildet sein.

Wenn - in Anbetracht dieser Konfiguration - sich der Filtereinschub in Arbeitsposition befindet, dann verhindern die Dichtungszapfen, die zwischen dem Einschub und dem Filtergehäuse festgeklemmt sind, jegliche Verschiebung durch Ansaugen der Dichtung unter der Einwirkung eines Druckabfalls, der auf der Motorseite durch die auf dem Filtereinsatz angesammelten Verunreinigungen entstanden ist.

### Kurze Beschreibung der Zeichnungen

Die Merkmale des Luftfilters, der Gegenstand der Erfindung ist, werden detaillierter erklärt unter Bezugnahme auf die nicht einschränkenden, beigefügten Zeichnungen, in denen
- die Abb. 1 eine Explosionszeichnung ist, welche die verschiedene Elemente eines Luftfilters mit drehbarem Filtereinschub darstellt,
- die Abb. 2 und 3 den Filtereinsatz dieses Luftfilters darstellen,
- die Abb. 4 und 5 den gleichen, in den drehbaren Einschub eingesetzten Filtereinsatz darstellen,
- die Abb. 6 und 7 Ansichten sind, die den jeweiligen Abb. 4 und 5 entsprechen, in denen aber die gesamte Einheit, die aus dem Filtereinsatz und dem Filtereinschub besteht, mit einer Zwischenplatte des Gehäuses abgedeckt ist,
- die Abb. 8 ein Querschnitt der in den Abb. 6 und 7 dargestellten Elemente ist.

### Ausführungsform(en) der Erfindung

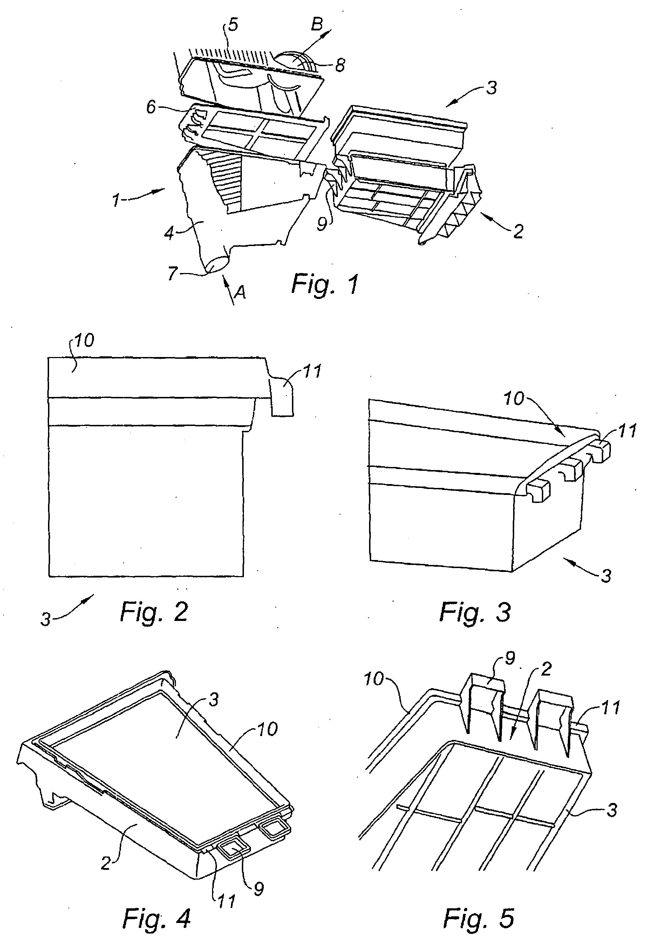

Gemäß Abb. 1 beinhaltet der Luftfilter ein Gehäuse 1, einen Filtereinschub 2 mit Öffnungen sowie einen Filtereinsatz 3, der in den Filtereinschub 2 eingesetzt ist.

Das Gehäuse 1 besteht aus der Montage von drei Teilen, d. h. einer Wanne 4, einer Abdeckung 5 und einer Zwischenplatte 6, die ebenfalls Öffnungen enthält, um Luft durchzulassen.

Die Wanne 4 ist mit einem Lufteinlass 7 ausgestattet, der von außen kommt und sich auf der Rohseite befindet, während die Abdeckung 5 mit einem Luftauslass 8 für die gefilterte Luft ausgestattet ist.

Gemäß den Abb. 1, 4 und 5 ist der Einschub 2 trapezförmig gestaltet und auf einer seiner seitlichen Flächen mit zwei Befestigungslaschen 9 ausgestattet, die in die entsprechenden, nicht in den Abbildungen dargestellten Hohlräume eingefügt werden und die sich am unteren Teil der Wanne 4 des Gehäuses 1 befinden.

Die aus dem Filtereinschub 2 und dem darin eingesetzten Filtereinsatz 3 bestehende Einheit kann sich wegen der Drehung der Befestigungslaschen 9 in den zu der Wanne 4 gehörenden Hohlräumen zwischen einer Arbeitsposition, in welcher diese Einheit in dem Gehäuse 1 zwischen der Wanne 4 und der Zwischenplatte 6, die ebenfalls mit der Abdeckung 5 abgedeckt ist, blockiert ist, und einer Freigabeposition verschieben, in der sie aus dem Gehäuse 1 nach dem Ausbau der Abdeckung 5 und der Zwischenplatte 6 herausgenommen werden kann, um so den Austausch des Filtereinsatzes 3 zu ermöglichen, wenn dieser verbraucht ist.

Die Befestigungslaschen 9 stellen somit die Drehachse der Einheit dar, die von dem Filtereinschub 2 und dem Filtereinsatz 3 während ihres Verschiebens zwischen einer Arbeitsposition und einer Freigabeposition gebildet wird.

Die Geometrie der verschiedenen Teile des Gehäuses 1 und die Geometrie des Filtereinschubs 2 sind derart angepasst, dass in Arbeitsposition die von dem Lufteinlass 7 in Pfeilrichtung A angesaugte atmosphärische Luft zwingend durch den Filtereinsatz 3 strömen muss, bevor sie durch den Luftauslass 8 in Pfeilrichtung B hinausströmt, so dass sie dem Motor zugeführt werden kann.

Um die Dichtheit gemäß den Abb. 2 bis 5 zwischen der Reinseite und der Rohseite sicherzustellen, ist der Filtereinsatz 3 mit einer umlaufenden Dichtung 10 ausgestattet.

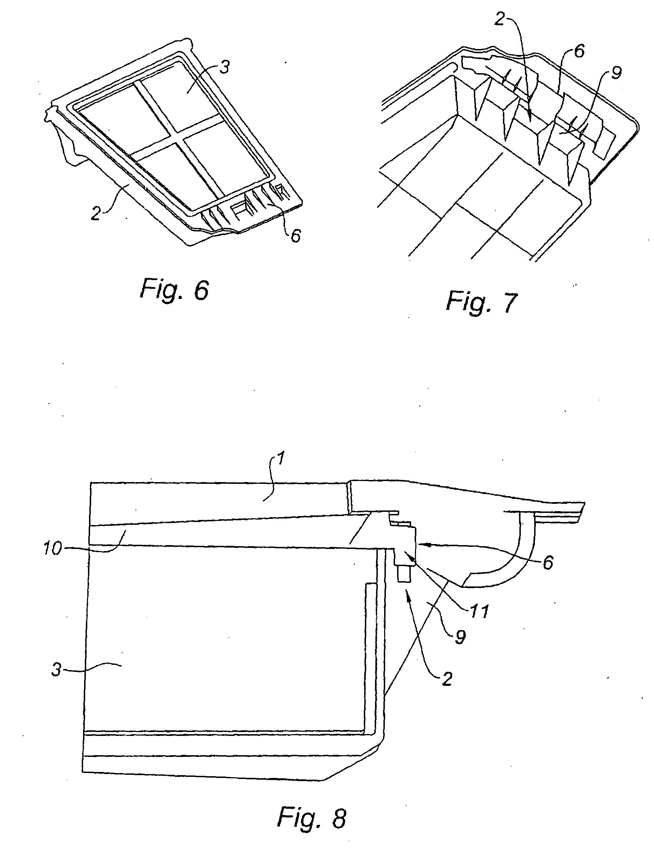

Gemäß Abb. 6 wird diese Dichtung 10 zwischen dem Filtereinschub 2 und der Zwischenplatte 6 des Gehäuses 1 in Arbeitsposition zusammengepresst.

Wie schon oben erwähnt, ist diese Kompression allerdings im unteren Teil der Wanne 4 bei den Befestigungslaschen 9 schwächer und es wird vorgeschlagen, der Dichtung 10 hier Mittel hinzuzufügen, die jegliche Verschiebung dieser Dichtung verhindern, vor allem aufgrund einer Ansaugung, die durch einen vom Motor auf der Reinseite erzeugten Unterdruck hervorgerufen wird.

Gemäß den Abb. 2 und 3 ist die Dichtung 10 bei der Drehachse des Filtereinschubs 2 um die Wanne 4 des Gehäuses 1 mit drei hakenförmigen Dichtungszapfen 11 ausgestattet, d. h. ein mittlerer und zwei seitliche Dichtungszapfen, die in der Verlängerung dieser Dichtung 10 angebracht sind.

Gemäß den Abb. 4 und 5 ragen die Dichtungszapfen 11 über den Filtereinschub 2 hinaus und werden zwischen die Befestigungslaschen 9 dieses Einschubs eingeschoben.

Gemäß den Abb. 7 und 8 sind in Arbeitsposition die Dichtungszapfen 11 zwischen der Zwischenplatte 6 des Gehäuses 1 und dem Filtereinschub 2 so eingeklemmt, dass die Dichtheit zwischen der Reinseite und der Rohseite hier gesichert ist.

## Patentansprüche

1. Luftfilter, dazu bestimmt, in einem unterhalb der Motorhaube eines Kraftfahrzeugs zu reinigenden Luftstrom eingebaut zu werden und beinhaltend:
- ein Filtergehäuse (1) mit einem Lufteinlass (7) auf der Rohseite und einem Luftauslass (8) auf der Reinseite,
- einen herausnehmbaren Filtereinschub (2), der zwischen dem Lufteinlass (7) und dem Luftauslass (8) in Richtung des zu reinigenden Luftstromes platziert ist, wobei der Filtereinschub (2) im Verhältnis zum Filtergehäuse (1) beweglich drehbar um eine Achse in dessen hinterem Teil gelagert ist, und zwar einerseits zwischen einer Arbeitsposition, in der er in eine Lagerung dieses Gehäuses (1) eingeführt wird, und andererseits einer Freigabeposition, in der er aus dieser Lagerung entfernt wird, damit er aus dem Filtergehäuse (1) herausgenommen werden kann, und
- einen Filtereinsatz (3), der in den Filtereinschub (2) eingesetzt und mit einer Dichtung (10) versehen ist, die beim Einbau des Filtereinschubs (2) in Arbeitsposition so zusammengepresst wird, dass die Dichtheit zwischen diesem Einschub (2) und dem Filtergehäuse (1) in dieser letzten Position sichergestellt ist, **dadurch gekennzeichnet, dass** die Dichtung (10) an der Drehachse des Filtereinschubs (2) mit Dichtungszapfen (11) versehen ist, die sich in deren Verlängerung befinden und über diesen Einschub (2) so hinausragen, dass sie zwischen ihm und dem Filtergehäuse (1) in Arbeitsposition festgeklemmt werden.

2. Luftfilter nach Anspruch 1, **dadurch gekennzeichnet, dass** die Dichtungszapfen (11) hakenförmig sind.

## Claims

1. Air cleaner, destined to be built into an air flow to be cleaned underneath the engine hood of a motor vehicle and comprising:
- a filter housing (1) with an air intake (7) at the raw air side and an air outlet (8) at the clean air side,
- a detachable filter slide-in module (2) located between the air intake (7) and the air outlet (8) in the direction of the air flow to be cleaned, the filter slide-in module (2) being pivotable in relation to the filter housing (1) around an axis supported at its rear part, namely on the one hand between a working position in which it is inserted into a support of this housing (1), and on the other hand a release position in which it is removed from this support so that it can be detached from the filter housing (1), and
- a filter insert (3) which is inserted into the filter slide-in module (2) and provided with a sealing (10) which is during the mounting of the filter slide-in module (2) into the working position compressed in such a way that the tightness between this slide-in module (2) and the filter housing (1) is secured in this last position, **characterized in that** the sealing (10) on the axis of rotation of the filter slide-in module (2) is provided with sealing pins (11) which are located in its extension and protrude this slide-in module (2) is such a way that they are clamped between it and the filter housing (1) in working position.

2. Air cleaner according to claim 1, **characterized in that** the sealing pins (11) are hook-shaped.

## Revendications

1. Filtre à air destiné à être monté dans un flux d'air à épurer, sous le capot d'un véhicule automobile et comportant :
- un boîtier de filtre (1) muni d'une arrivée d'air (7) du côté non filtré et d'une sortie d'air (8) du côté filtré,
- un tiroir de filtration amovible (2) situé entre l'arrivée d'air (7) et la sortie d'air (8) dans le sens de l'écoulement du flux à épurer, ce tiroir de filtration (2) étant mobile en rotation par rapport au boîtier de filtre (1), autour d'un axe situé au niveau du fond de celui-ci, entre, d'une part, une position de travail dans laquelle il est introduit dans un logement de réception de ce boîtier (1), et, d'autre part, une position de libération dans laquelle il est dégagé de ce logement pour pouvoir être extrait du boîtier de filtre (1), et
- une garniture filtrante (3) montée dans le tiroir de filtration (2) et équipée d'un joint d'étanchéité (10) qui est mis en compression lors du montage du tiroir de filtration (2) en position de travail de façon à garantir l'étanchéité entre ce tiroir (2) et le boîtier de filtre (1) dans cette dernière position, **caractérisé en ce que** le joint d'étanchéité (10) est muni sur l'axe rotatif du tiroir de filtration (2) d'ergots d'étanchéité (11) qui se trouvent dans l'extension de ce tiroir (2) et le dépassent de telle manière qu'ils sont coincés entre celui-ci et le boîtier de filtre (1) dans leur position de travail.

2. Filtre à air selon la revendication 1, **caractérisé en ce que** les ergots d'étanchéité (11) sont en forme de crochets.
